# EUROPEAN PATENT APPLICATION

(11) **EP 0 855 310 A2**
(43) Date of publication of application: **29.07.1998**
(21) Application number: 97120828.5
(22) Date of filing: 27.11.1997
(51) Int. Cl.: B60R 1/00

(54) **Adjustable rear view mirror**

(30) Priority: 28.11.1996 IT MI962482
(71) Applicant: GFM S.r.l., 43100 Parma (IT)
(72) Inventor: Mozzati, Gianfranco, 20090 Pioltello (Milano) (IT)

(57) **Abstract**

A mechanical device integrating the conventional, internal rear view mirror (2), directly adaptable on conventional rear view mirrors (2) or encompassed in those newly manufactured, made, essentially, of a body (1) on which are two preoriented mirrors (5,6), both capable of independent adjustment. This device, that has the same transversal size of the conventional rear view mirrors (2), extends the posterior visual angle in all directions. This invention is particularly suitable to increase the safety of manoeuvres, that need as wide as possible rear visual angle.

## Description

The present invention relates to a rear view mirror conceived to enlarge the posterior visual angle for the driver of a vehicle.

The purpose of a rear view mirror is to enable a driver to see objects behind his vehicle while he is facing forward. The safety of a driver, his passengers and other motorists is jeopardized if a driver attempts to turn, change lanes or stop without an awareness of the presence of other motorists or conditions behind him.
Prior art rear view mirrors are normally assembled with one solid mirror, permitting the driver to see a limited view of the area behind his vehicle. Due to the excessive number of traffic accidents that occur everyday, it is a valuable tool in safe and defensive driving to have a broadened view of the area sorrounding one's car.

The present invention concerns an adjustable rear view mirror, comprised of more than one mirror, that enlarges a driver's visual scope of the area surrounding his vehicle. The present invention further concerns a view-broadening, adjustable rear view mirror that is adaptable to existing, conventional rear view mirrors.

The present invention provides an adjustable rear view mirror having two, pre-oriented, independently adjustable mirrors converging at the mean point of the device. The ability of these two mirrors to be adjusted separately allows a driver to enlarge his posterior view.

In accordance with the invention, two knobs inserted along the edges of the device permit, by means of rotation, an accurate adjustment of the mirrors. A pliable support, set in the center of the device, links and houses the corresponding extremities of the adjustable mirrors and is connected to the means for rotation.
This rear view mirror device may be adapted to clamp onto a conventional rear view mirror. The body of the device may be furnished with hooks that allow a secure and stable fastening between the body of the device and the existing, conventional, internal rear view mirror in a vehicle.
This rear view mirror device, further furnished of a third mirror of longitudinal size similar to the sum of the lengths of the two adjustable mirrors, and of a conventional mounting system, may be installed at the time of the vheicle's manufacture in place of the conventional rear view mirror.

The present invention will now be described by way of example and with reference to the accompanying drawings in which:
Figure 1 is a frontal perspective view of an adjustable rear view mirror, having two adjustable mirrors mounted above a conventional rear view mirror, constructed in accordance with a preferred embodiment of the invention; and
Figure 2 is a plan view, as viewed from above, of the device of Figure 1.

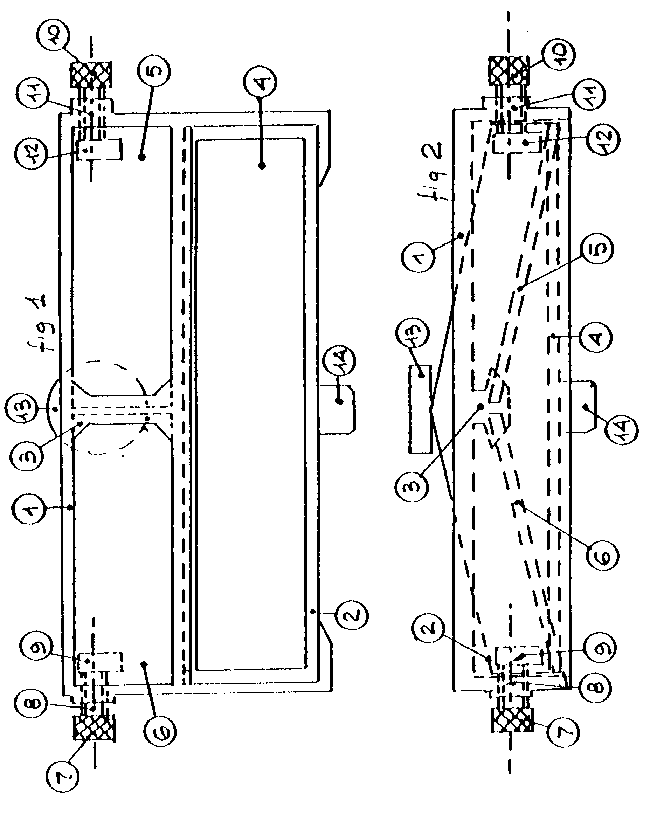

Figures 1 and 2 illustrate an adjustable rear view mirror device 1 characterized by two adjustable mirrors 5 and 6 in accordance with a preferred embodiment of the present invention.
The adjustable mirrors 5 and 6 are independently adjustable by means of rotation of two knobs 7 and 10 inserted along the edges of the device 1. The knobs 7 and 10 are supported in special threaded seats 8 and 11 and connected to means for rotation 9 and 12. As the knobs 7 and 10 are turned, the means for rotation 9 and 12 transmit the movement to the adjustable mirrors 5 and 6. The knobs 7 and 10 may be progressively turned in order to vary the direction of the adjustable mirrors 5 and 6 until they reflect the largest possible rear vision area.
The adjustable mirrors 5 and 6 are clamped with their corresponding extremities in special slits of a pliable support 3 set in line with the mean line of the body of the device 1. The pliable support 3 links and houses the corresponding extremities of the adjustable mirrors 5 and 6 and is connected to the means for rotation 9 and 12.
A conventional rear view mirror device 2 to which the adjustable rear view mirror device 1 may be attached is shown in Figures 1 and 2. A clamping system 13 attaches the rear view mirror device 1 to the conventional rear view mirror device 2. The conventional mirror 4 of the conventional rear view mirror device 2 remains in its original location on the vehicle. The adjustable traffic beam mechanism 14 of the conventional rear view mirror device 2 remains functional for the conventional mirror 4.

The foregoing description is for purposes of illustration only and is not intended to limit the scope of protection accorded this invention. The scope of protection is to be measured by the following claims, which should be interpreted as broadly as the inventive contribution permits.

## Claims

1. A rear view mirror device for vehicles, comprising at least two independently adjustable mirrors.

2. A rear view mirror device as claimed in Claim 1, characterised in that said mirrors are affixed to the device adjacent one another, converging in a vertical line at a midpoint of the device.

3. A rear view mirror device as claimed in Claim 2, wherein a pliable support having at least one threaded seat per adjustable mirror operatively connects the adjustable mirrors at the vertical line of convergence.

4. A rear view mirror device as claimed in Claim 3, wherein a means for rotation is operatively connected to each of the adjustable mirrors.

5. A rear view mirror device as claimed in Claim 4, wherein the pliable support is operatively connected to each of the means for rotation.

6. A rear view mirror device as claimed in Claim 5, wherein a knob for adjusting the adjustable mirrors is supported in each threaded seat and is operatively connected to the means for rotation.

7. A rear view mirror device as claimed in Claim 6, further comprising a third mirror having a longitudinal dimension roughly equal to the combined length of the at least two independently adjustable mirrors, with a conventional mounting system for mounting the device to a windshield in place of a conventional rear view mirror.

8. A rear view mirror device as claimed in Claim 1, further comprising a clamping system for attaching the device to a conventional rear view mirror device.

9. A device as claimed in Claim 8, wherein the conventional rear view mirror device comprises an adjustable traffic beam mechanism.
